# EUROPEAN PATENT SPECIFICATION

(11) **EP 3 219 371 B1**
(45) Date of publication and mention of the grant of the patent: **30.01.2019**
(21) Application number: 17160345.9
(22) Date of filing: 10.03.2017
(51) Int. Cl.: B01D 3/00, B01D 3/20, B01D 3/22, B01D 3/32, B01D 11/04

(54) **COLUMN TRAY FOR THE REACTIVE DISTILLATION OF HETEROAZEOTROPES AND PROCESS USING THE TRAY**
KOLONNENBODEN ZUR REAKTIVEN DESTILLATION VON HETEROAZEOTROPEN UND VERFAHREN ZUR VERWENDUNG DES KOLONNENBODENS
PLATEAU DE COLONNE DE DISTILLATION RÉACTIVE D'HÉTÉROAZÉOTROPES ET PROCÉDÉ UTILISANT LEDIT PLATEAU

(30) Priority: 14.03.2016 EP 16160081
(43) Date of publication of application: 20.09.2017
(73) Proprietor: Ineos Solvents Germany GmbH, 47443 Moers (DE); Technische Universität Clausthal, 38678 Clausthal-Zellerfeld (DE)
(72) Inventor: HOFFMAN, Ulrich, 37154 Northeim (DE); KUNZ, Ulrich, 37520 Osterorde (DE); LOHMER, Gunther, 45470 Mulheim an der Ruhr (DE); SCHNITZLER, Dirk, 44629 Herne (DE); SCHULER, Joachim, 45772 Marl (DE)
(74) Representative: Smith, Julian Philip Howard

(56) References cited:
- EP-A1- 0 407 038
- GB-A- 211 542
- US-A- 1 862 758
- US-A- 2 501 114
- US-A- 4 439 350

## Description

The present invention relates to reactive distillation, and in particular to a column tray for use in a reactive distillation column and to a reactive distillation process using a column containing a plurality of such trays.

Reactive distillation columns are used for concurrently carrying out reactions and separating the reactants from the products by fractional distillation, usually using catalyst structures as part of the distillation structure. The columns typically use catalysts arranged on trays or in the form of structured packages. EP 407038A describes a column equipped with an ion exchange catalyst which is wrapped in a cloth belt and wound with wire mesh to form bales having an open structure such that both the gas phase and liquid phase can penetrate the catalyst structure. Such catalytic bales are also disclosed in US 4242530, in which the ion exchange resin beads are arranged in a plurality of pockets in a cloth belt. This belt is supported in the reactor by open mesh knitted stainless steel wire. The bales can be introduced into the reactor on trays.

An example of a process suitable for use in a reactive distillation column is the production of ethers from alcohols by acid catalysed dehydration, such as the dehydration of ethanol to form diethylether, in which a heteroazeotrope is formed during the reaction.

The dehydration of alcohols to form ethers, catalysed by acids, has been well known for many decades. The alcohol is mixed with an acid and heated at ambient pressure to distill off the ether which forms the volatile vapour phase. This approach is commonly used to shift the chemical equilibrium by removal of the product. The disadvantage of this simple procedure is that during batchwise operation the concentrated acid can cause the formation of olefins rather than the desired ether: a typical example is the formation of ethylene from ethanol. When the reaction is finished, a residue remains comprising the acid diluted with water formed during the reaction. This residue must be recovered and processed to make it useable for the next batch of production, or alternatively discarded which causes additional costs and is a further disadvantage of the traditional process. Another disadvantage of the sulphuric acid catalysed process is the corrosive potential of sulphuric acid, which necessitates special materials to be used in the construction of the equipment.

The conversion of alcohols to ethers by acid-catalysed reaction is governed by a chemical equilibrium. The reactions involved are shown below: 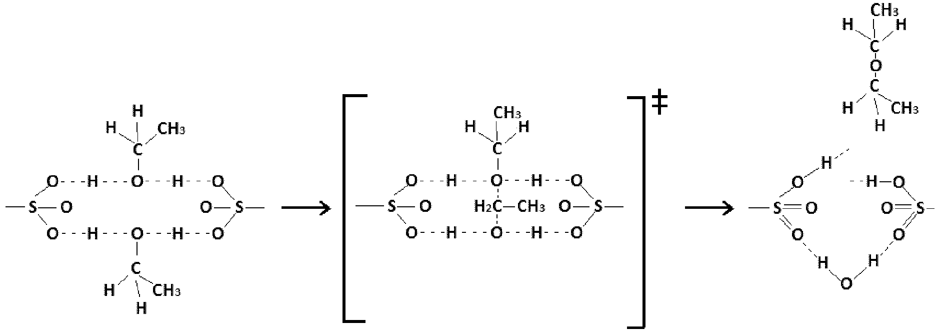 (taken from Bruce C. Gates: "Catalytic Chemistry", John Wiley & Sons, 1992, ISBN 0-471-51761-5, page 203).

The process can be improved by using ion exchange resins as solid acidic catalysts instead of sulphuric acid, as disclosed in US 3267156. A further improvement is the use of reactive distillation, such as disclosed in EP 0407038A mentioned above. In a reactive distillation column the progress of the above reaction is influenced not only by the chemical equilibrium but also by the vapour-liquid equilibrium of the reaction mixture. During the reactive distillation process the dehydration reactions occur in a distillation column equipped with an acidic ion exchange resin as the solid catalyst. Immediately upon formation, the ether is removed from the reaction mixture by distillation. This shifts the chemical equilibrium composition of the reaction towards higher conversion.

During the production of diethylether by reactive distillation the phase behaviour of the mixture changes. Normally the alcohol, ether and water are in the gas phase and/or liquid phase. On the various stages of a reactive distillation column a liquid phase will form consisting of a homogeneous mixture of the mentioned compounds. This liquid phase is in contact with the acid catalyst. It is also in phase equilibrium with the corresponding gas phase, removing ether by evaporation from the liquid phase. At higher conversion a new situation arises in the distillation column: the mixture separates into two liquid phases, an organic phase rich in ether and an aqueous phase rich in alcohol. This is a heteroazeotrope. If the organic phase which has a high concentration of produced ether comes into contact with the

Distillation columns known in the art include those disclosed in US 4439350, in which a fixed bed catalyst in the form of a contact catalyst structure comprises closed porous containers into which a solid catalysts is introduced. The porous containers are arranged on trays inside the reactor.

Usually the residence time of the liquid phase in a reactive distillation structure as described above is in the range of a few minutes. This time may be too short for slow chemical reactions to reach high conversion rates. In US 4089752 a column tray is disclosed which provides increased residence time for liquid reactants during reactive distillation. This is achieved by introducing a reservoir for the downcoming liquid phase. The volume of the reservoir is considerable, avoiding contact of the liquid phase with the vapour phase. A heterogeneous solid catalyst is not mentioned.

US 5338517 discloses a reactive distillation column reactor which uses trays with chimney like channels to conduct the gas phase and increase the vapour velocity so as to achieve good mixing of a solid catalyst in the liquid phase.

In US 5130102 a system is provided comprising a reaction tray containing catalyst and a distillation tray connected by a continuous liquid level. A vapour riser is provided through the reaction tray as a by-pass which carries the vapour from a lower distillation tray to a vapour distribution area underneath the coupled distillation tray. Liquid flows down through a downcomer, bypassing the coupled distillation tray and immersing the catalyst, then rises upward onto the coupled distillation tray where it is intimately contacted with the rising vapour phase, thereby facilitating effective distillation.

All these devices can promote contact of the liquid phase with the catalyst. But the situation where two immiscible liquid phases form together on one tray is not considered. When this happens, the newly formed ether product can again come into contact with the catalyst. This reduces the effective reaction rate and can even lead to the reverse reaction.

US 2501114 discloses a column tray for fractional distillation rather than reactive distillation, in which granular solid material, which may be catalytic but is more usually by-product, may be present in only one of the phases. However the apparatus is designed to ensure that the solid material does not accumulate in the trays, but is instead carried down the column with the liquid. Thus any solid material never remains in a fixed location, and it is not possible to control the catalyst amount present in any tray, or to have different amounts of catalyst present in different trays.

It is an object of the present invention to provide a column tray for a reactive distillation column which prevents contact of the product-rich phase with the catalyst whilst simultaneously contacting the liquid phase having the lower product concentration intimately with the catalyst. Accordingly the present invention provides a column tray for a reactive distillation column, said tray having first and second overflow weirs of different heights separated by a divider extending from below the level of the lower weir to above the level of the higher weir, said divider permitting liquid flow between the two weirs at a level below the lower weir, wherein a catalytic material is fixed in position either entirely below the level of the lower weir or entirely above the level of the lower weir.

Preferably the tray further comprises respective downcomers into which each weir discharges. A second aspect of the invention provides a reactive distillation column comprising an upper column tray and a lower column tray arranged below the upper tray, both trays having first and second overflow weirs of different heights separated by a divider extending from below the level of the lower weir to above the level of the higher weir, said divider permitting liquid flow between the two weirs at a level below the lower weir, a catalytic material being fixed in position either entirely below the level of the lower weir or entirely above the level of the lower weir; wherein the lower weir in the upper tray discharges via a downcomer into the lower tray at a level below that of the lower weir in the lower tray, and the upper weir in the upper tray discharges via a downcomer into the lower tray at a level above that of the lower weir in the lower tray.

Preferably the column comprises a plurality of said column trays in a vertical array, each of which discharges in the same manner described above into the tray below. The column usually comprises between 2 and 10 trays, more typically from 3 to 7 trays.

The invention further provides a process according to claim 5. Usually the lower phase is an aqueous phase and the upper phase is an organic phase.

In all of the above aspects of the invention, the catalytic material is fixed in position entirely below the level of the lower weir, such that in use it is in contact solely with the lower (normally aqueous) phase of the two phase liquid mixture, or the catalytic material is fixed in position entirely above the level of the lower weir, such that in use it is in contact solely with the upper (normally organic) phase of the two phase liquid mixture.

In all aspects of the invention, the catalytic material is preferably located in the tray, but may alternatively or additionally be located in the downcomer into which one of the weirs discharges. In all cases however, the catalytic material is located such that it is exclusively in contact with just one of the liquid phases: either the lower (normally aqueous) phase which discharges over the lower weir, or the upper (normally organic) phase which discharges over the upper weir. This ensures that any further chemical reaction takes place exclusively in the phase with which the catalytic material is in contact.

In a reactive distillation column comprising a plurality of column trays arranged in a vertical array, the amount of catalytic material in each tray is usually the same. However it is possible for the amount of catalytic material not to be the same in all of the trays: in a vertical array, the volume or concentration of catalytic material may either increase or decrease in successive trays in the array.

Preferably the process of the invention is for the dehydration of alcohols to form ethers, such as the dehydration of ethanol to form diethylether. In such a case the lower phase is the aqueous phase and the upper phase is the organic phase, and the catalytic material is located in contact with the lower aqueous phase. Thus the upper organic phase which is rich in ether is kept separate from the catalytic material, whilst the aqueous phase which is rich in alcohol is in contact with the catalyst such that further reaction can take place. An alternative embodiment of the invention is the reverse reaction in which an ether is converted to an alcohol by hydrolysis. In this case the catalytic material is located entirely above the level of the lower weir, in contact exclusively with the upper organic phase.

The following preferred features apply to all aspects of the invention.

The or each column tray preferably further comprises a capped riser located between the divider and the upper weir, the riser having an outlet into the tray at a level below that of the lower weir. The capped riser receives vapour from below the tray which condenses into the lower liquid phase in the tray.

Preferably the divider is arranged such that the now path permitted between the two weirs is as close to the base of the tray as possible; preferably the upper limit of the flow path is no more than 50%, more preferably no more than 30%, of the height of the lower weir above the base of the tray. It is also preferred that the divider is located adjacent the lower weir so as to minimise the surface area of the tray between the divider and the lower weir. More preferably the divider is located such that the surface area of the tray between the divider and the lower weir constitutes less than 10% of the total surface area of the tray. These preferred arrangements are intended to minimise any discharge of the upper organic layer across the lower weir, which can occur in the initial stages of operation of the process when the total height of the two-phase liquid layer is very low, such that the bottom of the upper organic layer is below the top limit of the flow path through the divider to the lower weir.

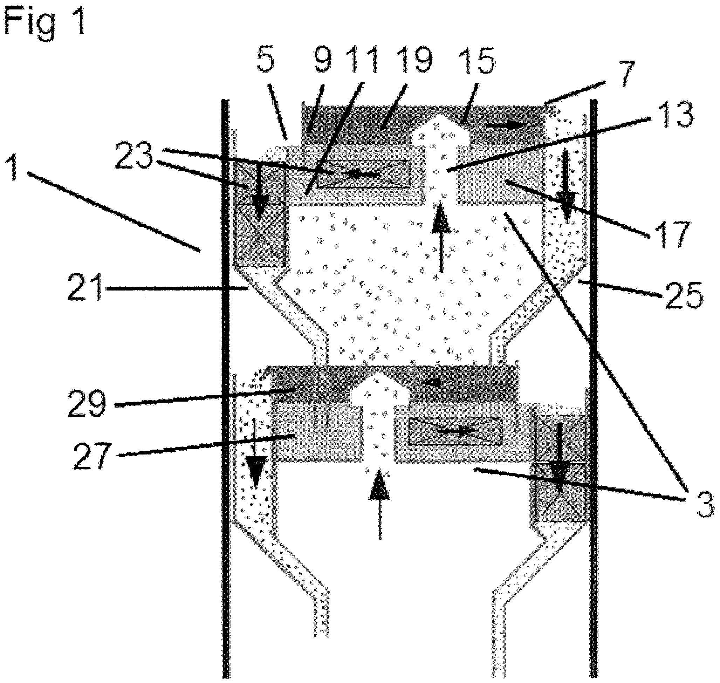

A preferred embodiment of a catalyst tray according to the invention is disclosed in Figure 1. This shows a reactive distillation column 1 comprising two trays 3. Referring to the upper tray, this has a lower weir 5 on one side and a upper weir 7 on the other. These are separated by a divider 9, underneath which there is a passage 11 for liquid flow.

During operation of the reactive distillation column, vapour rises through a riser 13 covered with a cap 15 and enters into the liquid phase on the tray 3. By means of this intimate contact good mass transfer is achieved, which improves the effectiveness of the distillation process. On the tray 3 the condensed liquid separates into two liquid phases if the requirements for the formation of a heteroazeotrope are satisfied. Catalyst 23 is located in the tray entirely below the level of lower weir 5. such that it contacts only the lower phase 17. The organic phase has the lower density and forms the upper phase 19, whereas the aqueous phase has the higher density and forms the lower phase 17. In ether production the organic phase is rich in ether and the water phase is rich in alcohol.

The lower weir 5 and upper weir 7 have relative heights such that the lower aqueous phase 17 can flow over weir 5 and into a downcomer 21 which is filled with further catalyst 23. From there the aqueous phase is diverted directly into the lower aqueous phase 27 of the tray below. Divider 9 prevents the upper organic phase 19 from flowing over weir 5: instead it overflows weir 7 into downcomer 25. where it is diverted into the upper organic phase 29 of the tray below. Downcomer 25 for the organic phase is free of catalyst. In this way the alcohol-rich mixture (aqueous phase) in contact with the catalyst is further converted to ether, whilst reverse reaction of the ether present in the organic phase is avoided.

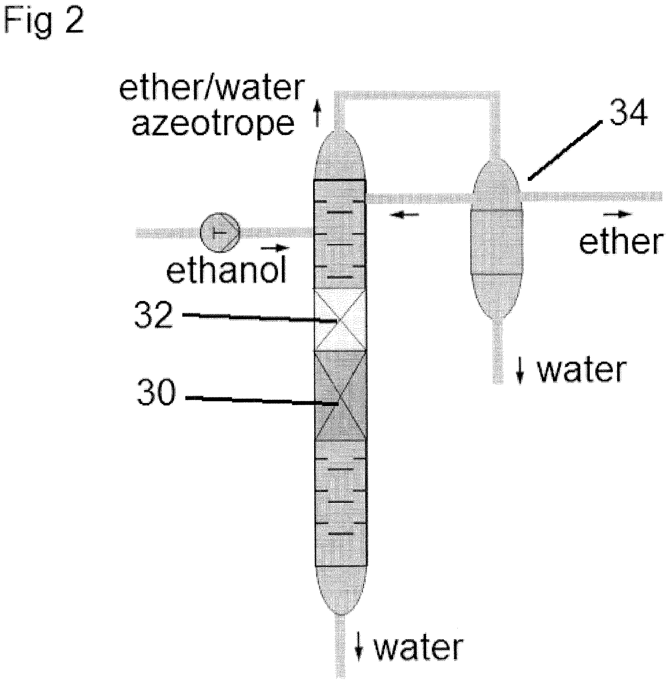

In Figure 2 a distillation apparatus containing a reactive distillation column according to the invention is shown when used for the dehydration of ethanol to form an ether. The apparatus comprises a column in the lower part 30 of which is in the form of a structured packing or other known design as is known the art. The upper part of the column where a heteroazeotrope can form contains the reactive distillation column 32 according to the invention: typically 2 to 10 trays are employed. Vessel 34 does not contain any catalytic material, but receives vapour which it condenses and then separates into two phases. Part of the organic phase separated in vessel 34 is recycled to the column as shown.

## Claims

1. Column tray (3) for a reactive distillation column (1), said tray having first and second overflow weirs (5, 7) of different heights separated by a divider (9) extending from below the level of the lower weir (5) to above the level of the higher weir (7), said divider permitting liquid flow between the two weirs (5, 7) at a level below the lower weir (5), wherein a catalytic material (23) is fixed in position either entirely below the level of the lower weir (5) or entirely above the level of the lower weir (5).

2. Column tray according to claim 1, wherein the tray further comprises respective downcomers into which each weir discharges.

3. Reactive distillation column comprising an upper column tray and a lower column tray arranged below the upper tray, each tray being as defined in claim 1; wherein the lower weir in the upper tray discharges via a downcomer into the lower tray at a level below that of the lower weir in the lower tray, and the upper weir in the upper tray discharges via a downcomer into the lower tray at a level above that of the lower weir in the lower tray.

4. Reactive distillation column according to claim 3, comprising from 2 to 10 of said column trays in a vertical array, each of which discharges into the tray below.

5. Process for reactive distillation of heteroazeotropes, comprising
performing a reactive distillation in a distillation column (1) comprising an upper column tray (3) and a lower column tray (3) arranged below the upper tray (3), each tray having first and second overflow weirs (5, 7) of different heights separated by a divider (9) extending from below the level of the lower weir (5) to above the level of the higher weir (7), said divider (9) permitting liquid flow between the two weirs (5, 7) at a level below the lower weir (5), and a catalytic material (23) fixed in position either entirely below the level of the lower weir (5) or entirely above the level of the lower weir (5), wherein the lower weir (5) in the upper tray (3) discharges via a downcomer (21) into the lower tray (3) at a level below that of the lower weir in the lower tray (3), and the upper weir (7) in the upper tray (3) discharges via a downcomer (25) into the lower tray (3) at a level above that of the lower weir in the lower tray (3),
in which process downcoming vapour from a two-phase liquid condenses in the upper column tray (3) to form a two phase liquid mixture, the lower phase (17) of which discharges over the lower weir (5) via a downcomer (21) into a corresponding lower phase (27) in the lower tray (3), and the upper phase (19) of which discharges over the upper weir (7) via a downcomer (25) into a corresponding upper phase (29) in the lower tray (3), wherein the catalytic material (23) is in contact with only one of said lower (17, 27) and upper (19, 29) phases.

6. Process according to claim 5, wherein the distillation column comprises a lower portion containing catalytic material and an upper portion containing at least two of said column trays in a vertical array.

7. Process according to claim 5 or 6, which is for the production of ethers, preferably diethylether, by dehydration of alcohols, or for the production of alcohols, preferably ethanol, by the hydrolysis of ethers.

8. Column tray, column or process according to any preceding claim, wherein at least a portion of the catalytic material is located in a downcomer.

9. Column tray, column or process according to any preceding claim, wherein the catalytic material is an acidic solid catalyst.

10. Column tray, column or process according to any preceding claim, wherein the or each column tray further comprises a capped riser located between the divider and the upper weir, the riser having an outlet into the tray at a level below that of the lower weir.

11. Column tray, column or process according to any preceding claim, wherein the divider is arranged such that upper limit of the flow path permitted between the two weirs is no more than 50% of the height of the lower weir above the base of the tray.

12. Column tray, column or process according to any preceding claim, wherein the divider is located such that the surface area of the tray between the divider and the lower weir constitutes less than 10% of the total surface area of the tray.

13. Column tray, column or process according to any preceding claim, wherein the catalytic material is located entirely below the level of the lower weir.

14. Column tray, column or process according to any of claims 1 to 13, wherein the catalytic material is located entirely above the level of the lower weir.

## Patentansprüche

1. Kolonnenboden (3) für eine Reaktivdestillationskolonne (1), wobei der Boden erste und zweite Überlaufwehre (5, 7) verschiedener Höhe hat, die durch ein Trennelement (9) getrennt sind, das sich von unterhalb des Pegels des unteren Wehrs (5) bis oberhalb des Pegels des oberen Wehrs (7) erstreckt, wobei das Trennelement den Flüssigkeitsstroms zwischen den zwei Wehren (5, 7) auf einem Pegel unterhalb des unteren Wehrs (5) ermöglicht, wobei ein katalytisches Material (23) in einer Position entweder vollständig unterhalb des Pegels des unteren Wehrs (5) oder vollständig oberhalb des Pegels des unteren Wehrs (5) festgesetzt ist.

2. Kolonnenboden nach Anspruch 1, wobei der Boden ferner entsprechende Downcomer (Rücklaufrohre) umfasst, in die sich jedes Wehr ergießt.

3. Reaktivdestillationskolonne, die einen oberen Kolonnenboden und einen unteren Kolonnenboden umfasst, der unterhalb des oberen Bodens angeordnet ist, wobei jeder Boden so wie in Anspruch 1 definiert ist; wobei das untere Wehr im oberen Boden sich über einen Downcomer in den unteren Boden auf einem Pegel unterhalb des Pegels des unteren Wehrs im unteren Boden entleert, und das obere Wehr im oberen Boden entleert sich über einen Downcomer in den unteren Boden auf einem Pegel oberhalb des Pegels des unteren Wehrs im unteren Boden.

4. Reaktivdestillationskolonne nach Anspruch 3, die 2 bis 10 der Kolonnenböden in einem vertikalen Feld umfasst, wobei jeder sich in den Boden darunter entleert.

5. Prozess für die reaktive Destillation von Heteroazeotropen, umfassend
das Ausführen einer reaktiven Destillation in einer Destillationskolonne (1), die einen oberen Kolonnenboden (3) und einen unteren Kolonnenboden (3) umfasst, der unterhalb des oberen Kolonnenbodens (3) angeordnet ist, wobei jeder Boden erste und zweite Überlaufwehre (5, 7) von verschiedener Höhe hat, die durch ein Trennelement (9) getrennt sind, welches sich von unterhalb des Pegels des unteren Wehrs (5) bis oberhalb des Pegels des höheren Wehrs (7) erstreckt, wobei das Trennelement (9) ermöglicht, dass Flüssigkeit zwischen den zwei Wehren (5, 7) auf einem Pegel unterhalb des unteren Wehrs (5) fließt, und ein katalytisches Material (23), das in einer Position festgelegt ist, entweder vollständig unterhalb des Pegels des unteren Wehrs (5) oder vollständig oberhalb des Pegels des unteren Wehrs (5) festgelegt ist, wobei das untere Wehr (5) im oberen Boden (3) sich über einen Downcomer (21) in den unteren Boden (3) auf einem Pegel unterhalb des Pegels des unteren Wehrs im unteren Boden (3) entleert, und das obere Wehr (7) im oberen Boden (3) entleert sich über einen Downcomer (25) in den unteren Boden (3) auf einem Pegel oberhalb des Pegels des unteren Wehrs im unteren Boden (3), wobei bei diesem Prozess abwärtsströmender Dampf von einer Zweiphasen-Flüssigkeit im oberen Kolonnenboden (3) kondensiert, um eine Zweiphasen-Flüssigkeitsmischung zu bilden, deren untere Phase (17) sich über das untere Wehr (5) über einen Downcomer (21) in eine entsprechende untere Phase (27) im unteren Boden (3) entleert, und die obere Phase (19) derselben entleert sich über das obere Wehr (7) über einen Downcomer (25) in eine entsprechende obere Phase (29) im unteren Boden (3), wobei das katalytische Material (23) in Kontakt mit nur einer Phase aus der unteren (17, 27) und der oberen (19, 29) Phase ist.

6. Prozess nach Anspruch 5, wobei die Destillationskolonne einen unteren Teil umfasst, der katalytisches Material enthält, und einen oberen Teil, der zumindest zwei der Kolonnenböden in einer vertikalen Anordnung enthält.

7. Prozess nach Anspruch 5 oder 6, der für die Herstellung von Ethern, vorzugsweise Diethylether, durch Dehydrierung von Alkoholen oder zur Herstellung von Alkoholen, vorzugsweise Ethanol, durch die Hydrolyse von Ethern dient.

8. Kolonnenboden, Kolonne oder Prozess nach einem der vorherigen Ansprüche, wobei zumindest ein Teil des katalytischen Materials sich in einem Downcomer befindet.

9. Kolonnenboden, Kolonne oder Prozess nach einem der vorherigen Ansprüche, wobei das katalytische Material ein saurer fester Katalysator ist.

10. Kolonnenboden, Kolonne oder Prozess nach einem der vorherigen Ansprüche, wobei der oder jeder Kolonnenboden ferner ein gedeckeltes Steigrohr umfasst, das sich zwischen dem Trennelement und dem oberen Wehr befindet, wobei das Steigrohr einen Auslass in den Boden auf einem Pegel unterhalb des Pegels des unteren Wehrs hat.

11. Kolonnenboden, Kolonne oder Prozess nach einem der vorherigen Ansprüche, wobei das Trennelement derart angeordnet ist, dass die obere Begrenzung des Strömungspfades, die zwischen den zwei Wehren erlaubt ist, nicht mehr als 50 % der Höhe des unteren Werts oberhalb der Basis des Bodens hat.

12. Kolonnenboden, Kolonne oder Prozess nach einem der vorherigen Ansprüche, wobei das Trennelement derart angeordnet ist, dass die Oberfläche des Bodens zwischen dem Trennelement und dem unteren Wehr weniger als 10 % der Gesamtfläche des Bodens ausmacht.

13. Kolonnenboden, Kolonne oder Prozess nach einem der vorherigen Ansprüche, wobei sich das katalytische Material vollständig unterhalb des Pegels des unteren Wehrs befindet.

14. Kolonnenboden, Kolonne oder Prozess nach einem der Ansprüche 1 bis 13, wobei das katalytische Material sich vollständig oberhalb des Pegels des unteren Wehrs befindet.

## Revendications

1. Plateau de colonne (3) pour une colonne de distillation réactive (1), ledit plateau présentant des premier et second déversoirs de trop-plein (5, 7) de hauteurs différentes séparés par un séparateur (9) qui s'étend à partir d'en dessous du niveau du déversoir inférieur (5) jusqu'au-dessus du niveau du déversoir supérieur (7), ledit séparateur permettant à un liquide de s'écouler entre les deux déversoirs (5, 7) à un niveau en dessous du déversoir inférieur (5), dans lequel un matériau catalytique (23) est fixé en position soit entièrement en dessous du niveau du déversoir inférieur (5), soit entièrement au-dessus du niveau du déversoir inférieur (5).

2. Plateau de colonne selon la revendication 1, dans lequel le plateau comprend en outre des goulottes de descente respectives dans lesquelles chaque déversoir se décharge.

3. Colonne de distillation réactive comprenant un plateau de colonne supérieur et un plateau de colonne inférieur agencé en dessous du plateau supérieur, chaque plateau étant tel que défini dans la revendication 1; dans lequel le déversoir inférieur dans le plateau supérieur se décharge par l'intermédiaire d'une goulotte de descente dans le plateau inférieur à un niveau en dessous de celui du déversoir inférieur dans le plateau inférieur, et le déversoir supérieur dans le plateau supérieur se décharge par l'intermédiaire d'une goulotte de descente dans le plateau inférieur à un niveau au-dessus de celui du déversoir inférieur dans le plateau inférieur.

4. Colonne de distillation réactive selon la revendication 3, comprenant de 2 à 10 desdits plateaux de colonne en un agencement vertical, dont chacun se décharge dans le plateau en dessous.

5. Procédé pour la distillation réactive d'hétéroazéotropes, comprenant l'exécution d'une distillation réactive dans une colonne de distillation (1) comprenant un plateau de colonne supérieur (3) et un plateau de colonne inférieur (3) agencé en dessous du plateau supérieur (3), chaque plateau présentant des premier et second déversoirs de trop-plein (5, 7) de hauteurs différentes séparés par un séparateur (9) qui s'étend à partir d'en dessous du niveau du déversoir inférieur (5) jusqu'au-dessus du niveau du déversoir supérieur (7), ledit séparateur (9) permettant à un liquide de s'écouler entre les deux déversoirs (5, 7) à un niveau en dessous du déversoir inférieur (5), et un matériau catalytique (23) fixé en position soit entièrement en dessous du niveau du déversoir inférieur (5), soit entièrement au-dessus du niveau du déversoir inférieur (5), dans lequel le déversoir inférieur (5) dans le plateau supérieur (3) se décharge par l'intermédiaire d'une goulotte de descente (21) dans le plateau inférieur (3) à un niveau en dessous de celui du déversoir inférieur dans le plateau inférieur (3), et le déversoir supérieur (7) dans le plateau supérieur (3) se décharge par l'intermédiaire d'une goulotte de descente (25) dans le plateau inférieur (3) à un niveau au-dessus de celui du déversoir inférieur dans le plateau inférieur (3),
procédé dans lequel de la vapeur descendante en provenance d'un liquide à deux phases se condense dans le plateau de colonne supérieur (3) de manière à former un mélange de liquide à deux phases, dont la phase inférieure (17) se décharge au-dessus du déversoir inférieur (5) par l'intermédiaire d'une goulotte de descente (21) dans une phase inférieure correspondante (27) dans le plateau inférieur (3), et dont la phase supérieure (19) se décharge au-dessus du déversoir supérieur (7) par l'intermédiaire d'une goulotte de descente (25) dans une phase supérieure correspondante (29) dans le plateau inférieur (3), dans lequel le matériau catalytique (23) est en contact avec une seule desdites phases inférieures (17, 27) et supérieures (19, 29).

6. Procédé selon la revendication 5, dans lequel la colonne de distillation comprend une partie inférieure qui contient un matériau catalytique et une partie supérieure qui contient au moins deux desdits plateaux de colonne en un agencement vertical.

7. Procédé selon la revendication 5 ou 6, pour la production d'éthers, de préférence d'éther diéthylique, par déshydratation d'alcools, ou pour la production d'alcools, de préférence d'éthanol, par hydrolyse d'éthers.

8. Plateau de colonne, colonne ou procédé selon l'une quelconque des revendications précédentes, dans lequel au moins une partie du matériau catalytique est située dans une goulotte de descente.

9. Plateau de colonne, colonne ou procédé selon l'une quelconque des revendications précédentes, dans lequel le matériau catalytique est un catalyseur solide acide.

10. Plateau de colonne, colonne ou procédé selon l'une quelconque des revendications précédentes, dans lequel le ou chaque plateau de colonne comprend en outre une colonne montante fermée par un couvercle située entre le séparateur et le déversoir supérieur, la colonne montante présentant une sortie dans le plateau à un niveau en dessous de celui du déversoir inférieur.

11. Plateau de colonne, colonne ou procédé selon l'une quelconque des revendications précédentes, dans lequel le séparateur est agencé de telle sorte qu'une limite supérieure du chemin d'écoulement permis entre les deux déversoirs ne soit pas supérieure à 50 % de la hauteur du déversoir inférieur au-dessus de la base du plateau.

12. Plateau de colonne, colonne ou procédé selon l'une quelconque des revendications précédentes, dans lequel le séparateur est situé de telle sorte que l'aire de surface du plateau entre le séparateur et le déversoir inférieur constitue moins de 10 % de l'aire de surface totale du plateau.

13. Plateau de colonne, colonne ou procédé selon l'une quelconque des revendications précédentes, dans lequel le matériau catalytique est situé entièrement en dessous du niveau du déversoir inférieur.

14. Plateau de colonne, colonne ou procédé selon l'une quelconque des revendications 1 à 13, dans lequel le matériau catalytique est situé entièrement au-dessus du niveau du déversoir inférieur.
